# EUROPÄISCHE PATENTSCHRIFT

(11) **EP 3 053 133 B1**
(45) Veröffentlichungstag und Bekanntmachung des Hinweises auf die Patenterteilung: **28.11.2018**
(21) Anmeldenummer: 14792732.1
(22) Anmeldetag: 26.09.2014
(51) Int. Cl.: G06T 5/00, G06T 7/73

(54) **VERFAHREN UND VORRICHTUNG ZUR ANZEIGE DER UMGEBUNG EINES FAHRZEUGS UND FAHRERASSISTENZSYSTEM**
METHOD AND DEVICE FOR DISPLAYING A VEHICLE'S ENVIRONMENT AND DRIVER ASSISTANCE SYSTEM
PROCÉDÉ ET DISPOSITIF POUR AFFICHER L'ENVIRONNEMENT D'UN VÉHICULE ET SYSTÈME D'ASSITANCE AU CONDUCTEUR

(30) Priorität: 02.10.2013 DE 102013220005
(43) Veröffentlichungstag der Anmeldung: 10.08.2016
(73) Patentinhaber: Conti Temic microelectronic GmbH, 90411 Nürnberg (DE); Continental Automotive GmbH, 30165 Hannover (DE); Continental Teves AG & Co. OHG, 60488 Frankfurt am Main (DE)
(72) Erfinder: KRÖKEL, Dieter, 88097 Eriskirch (DE); EXNER, Christian, 88131 Lindau (DE); MEIER, Herbert, 93055 Regensburg (DE); LÜKE, Stefan, 61191 Rosbach vor der Höhe (DE); HOUBEN, Sebastian, 53175 Bonn (DE); SALMEN, Jan, 44809 Bochum (DE)
(86) Internationale Anmeldenummer: PCT/DE2014/200509
(87) Internationale Veröffentlichungsnummer: WO 2015/048967

(56) Entgegenhaltungen:
- DE-A1-102010 040 803
- KEVIN KOESER ET AL: "An Analysis-by-Synthesis Camera Tracking Approach Based on Free-Form Surfaces", 12. September 2007 (2007-09-12), PATTERN RECOGNITION; [LECTURE NOTES IN COMPUTER SCIENCE], SPRINGER BERLIN HEIDELBERG, BERLIN, HEIDELBERG, PAGE(S) 122 - 131, XP019071289, ISBN: 978-3-540-74933-2 Zusammenfassung Abschnitte "1 Introduction and Previous Work", "2 Spherical Camera", *3.1 Offline Model Generation", "3.2 Online Pose Estimation" Abbildungen 1,2,5

## Beschreibung

Die Erfindung betrifft ein Verfahren und eine Vorrichtung zur Anzeige der Umgebung eines Fahrzeuges, die insbesondere für den Einsatz in Fahrerassistenzsystemen geeignet sind sowie ein Fahrerassistenzsystem.

Fahrerassistenzsysteme sowie Verfahren und Vorrichtungen zur Anzeige der Umgebung eines Fahrzeuges sind grundsätzlich aus dem Stand der Technik bekannt. Hierzu wird beispielhaft auf DE 10059900A1 sowie DE10109665A1 verwiesen. Sogenannte kamera-basierte Top View-, Surround View- und Rear View- Systeme finden sich zunehmend in Fahrzeugen, um dem Fahrer das unmittelbare Umfeld des Fahrzeugs anzuzeigen und ihm dadurch z.B. das Rangieren seines Fahrzeugs zu erleichtern.

Die DE10247563A1 beschreibt ein Fahrerassistenzsystem, bei dem Gefährdungsobjekte eines Fahrzeugs auf einer Anzeigeeinrichtung augenfälliger als weniger gefährliche Gegenstände dargestellt werden.

Die DE10257484A1 offenbart ein Fahrerassistenzsystem mit einer Anzeigeeinrichtung zum perspektivisch korrekten Darstellen von mit einer Kamera erfassten Objekten. Weiterhin können zusätzliche Informationen zu den erfassten Objekten graphisch eingeblendet werden, um die Wahrnehmung durch einen Fahrer zu verbessern.

Die DE 10 2010 040 803 A1 beschreibt ein visuelles Fahrerinformations- und Warnsystem für einen Fahrer eines Kraftfahrzeugs, wobei dem Fahrer eine zweidimensionale Projektion mindestens eines dreidimensionalen Modells eines tatsächlich vorhandenen, stationären und/oder beweglichen Objekts dargestellt wird. Die Darstellung des Objekts kann dabei in ein dreidimensionales Modell der Fahrzeugumgebung eingefügt werden.

Der Artikel "An Analysis-by-Synthesis Camera Tracking Approach Based on Free-Form Surfaces" von Kevin Koeser et al., 12.09.2007 in Pattern Recognition, Lecture Notes in Computer Science, Springer, Berlin, Heidelberg, S. 122 - 131, ISBN: 978-3-540-74933-2, beschreibt die modellbasierte Posenschätzung und -verfolgung für eine Fischaugen-Kamera inklusive Verzeichnungskorrektur. Merkmale werden mit einer Datenbank abgeglichen für Online-Tracking nach Offline-Kartenerstellung. Das offline erstellte Modell wird verwendet, um Objekte zu identifizieren; die Resultate werden angezeigt.

Aufgabe der vorliegenden Erfindung ist es nun, ein verbessertes Verfahren und eine verbesserte Vorrichtung zur Anzeige der Umgebung eines Fahrzeugs vorzuschlagen.

Diese Aufgabe wird durch die Gegenstände der unabhängigen Ansprüche gelöst. Weitere Ausgestaltungen der Erfindung ergeben sich aus den abhängigen Ansprüchen.

Eine Ausführungsform der vorliegenden Erfindung betrifft ein Verfahren zur Anzeige der Umgebung eines Fahrzeuges gemäß Anspruch 1.

Insbesondere kann vorgesehen sein, dass die Aufbereitung der Sensordaten zu Roh-Bilddaten, die Verarbeitung der Roh-Bilddaten zu Objektinformationen und die Aufbereitung der Rohbilddaten zu Bild-Objekt-Daten, unter Verwendung der Objektinformationen und/oder eines Gitter-Modells, mittels wenigstens zwei getrennter Einrichtungen erfolgt. Dabei erfolgt vorzugsweise die Aufbereitung der Sensordaten zu Roh-Bilddaten mittels einer Bildaufbereitungs-Einrichtung und die Verarbeitung der Roh-Bilddaten zu Objektinformationen mittels einer Bildverarbeitungs-Einrichtung, wobei die Bildverarbeitungs-Einrichtung die Roh-Bilddaten von der Bildaufbereitungs-Einrichtung über eine erste datentechnische Verbindung (Hin-Kanal) empfängt. Weiterhin erfolgt die Aufbereitung der Rohbilddaten zu den Bild-Objekt-Daten vorzugsweise mittels der Bildaufbereitungs-Einrichtung, wobei die Bildaufbereitungs-Einrichtung die Objektinformationen von der Bildverarbeitungs-Einrichtung über eine zweite datentechnische Verbindung (Rück-Kanal) empfängt. Bei der Bildaufbereitungs-Einrichtung handelt es sich vorzugsweise um eine Einrichtung zur Aufbereitung der Sensordaten bzw. der Roh-Bilddaten für die Anzeige von Bilddaten im Fahrzeug. Bei der Bildverarbeitungs-Einrichtung handelt es sich vorzugsweise um eine Einrichtung zur Gewinnung von Objektinformationen beispielsweise für eine Einrichtung zur Steuerung von Fahrzeug-Parametern bzw. Fahrzeug-Funktionen. Dadurch wird ein mehrstufiges Bilddatenverarbeitungsverfahren geschaffen, wobei die aus der Bildverarbeitung für die Ansteuerung von Fahrzeug-Parametern bzw. Fahrzeug-Funktionen gewonnen Objektinformationen auf vorteilhafte Weise, insbesondere über einen Rückkanal von der Bildverarbeitungs-Einrichtung zur Bildaufbereitungs-Einrichtung, für die Aufbereitung der Bilddaten zur Anzeige im Fahrzeug genutzt werden können, beispielsweise um bei der Anzeige der Bilddaten Objekte hervorzuheben bzw. im Bild zu markieren.

Gemäß einem Beispiel betrifft ein Verfahren zur Anzeige der Umgebung eines Fahrzeuges mit den folgenden Schritten:
- Erfassen der Umgebung eines Fahrzeuges mit mindestens einem Sensor und Erzeugen von Sensordaten der Umgebung eines Fahrzeuges,
- Aufbereitung der Sensordaten zu Roh-Bilddaten in einem ersten Aufbereitungsschritt
- Aufbereitung der Roh-Bilddaten zu korrigierten Bild-Daten mit Hilfe eines Gitter-Modells in einem zweiten Aufbereitungsschritt
- Verwendung von sensorbasiert gewonnenen Objektinformationen zur Aufbereitung der korrigierten Bilddaten zu Bild-Objekt-Daten
- Anzeigen der Bild-Objekt-Daten.

Es wird also ein mehrstufiges, die Bilddaten verbesserndes Verfahren bereitgestellt. Die Sensordaten werden zu Roh-Bilddaten aufbereitet, mit deren Hilfe dann Objektinformationen gewonnen werden können, die wiederum zur Aufbereitung von Roh-Bilddaten zurückgeführt werden können. Es können also in einer Hin-Kanal-Richtung aus Sensordaten aufbereitete Roh-Bilddaten zur Verarbeitung der Roh-Bilddaten übertragen werden und in einem Rückkanal Objektinformationen zur (ggf. weiteren) Aufbereitung von Roh-Bilddaten übertragen werden. Dadurch kann die Aufbereitung der Bilddaten verbessert werden und es können im weiteren kombinierte Bild-Objekt-Daten angezeigt werden, die gegenüber den reinen Bilddaten zusätzliche Informationen enthalten.

Der mindestens eine Sensor kann dabei als jede Art geeigneter Sensor zur Erzeugung von Roh-Bilddaten ausgebildet sein, insbesondere als optischer Sensor wie z.B. als optische Kamera, Nachtsicht-System bzw. Restlichtverstärker-System, Infrarot-Kamera oder Wärmebild-Kamera. Grundsätzlich kann der Sensor aber auch zum Empfang von elektromagnetischer Strahlung anderer Wellenlängen wie z.B. Radar, Lidar oder zum Empfang von Schallwellen wie z.B. Ultraschall ausgebildet sein.

Die Objektinformationen können auf Basis eines Gitter-Modells der Umgebung des Fahrzeugs gewonnen werden. Damit können die Objektinformationen z.B. in Form einer Rasterkarte erfasst und/oder gespeichert und/oder übertragen werden. Weiter können Teilbereichen des Gitter-Modells spezifisch Informationen zugewiesen werden.

Objektinformationen können Informationen zur Charakterisierung und/oder Identifizierung von Objekten und/oder Zuständen von Objekten sein, insbesondere können diese Informationen die Position, Größe bzw. Höhe, Ausdehnung, Helligkeit, Bewegungsrichtung, Beschleunigung, Relativbewegung zum Sensor, Relativbewegungsrichtung zum Sensor, Relativbeschleunigung zum Sensor sein.

Auch im Rahmen der Aufbereitung der Roh-Bilddaten kann ein Gitter-Modell verwendet werden. Damit kann eine geeignete Korrektur bzw. Entzerrung von Bild-Rohdaten, insbesondere von verzerrten Bild-Rohdaten - beispielsweise aufgrund von optischen bzw. messtechnischen Verzerrungen aufgrund bestimmter Sensoreigenschaften wie z.B. Abbildungseigenschaften - erreicht werden. Aus Roh-Bilddaten werden damit korrigierte Bilddaten erzeugt, welche korrigierten Bildern entsprechen. Diese können dann weiteren Bilderarbeitungsschritten bzw. Bildaufbereitungsschritten zu Grunde gelegt werden.

Es kann vorgesehen sein, dass die Objektinformationen durch Abgleich mit Daten weiterer Sensoren verifiziert und/oder stabilisiert werden. Es können also zusätzlich oder ergänzend zu den vorgenannten Sensordaten, welche zur Erzeugung der Roh-Bilddaten genutzt werden, auch weitere Sensoren bzw. Sensordaten herangezogen werden. Dabei kann es sich z.B. um weitere optische Sensoren handeln wie z.B. als optische Kameras, Nachtsicht-Systeme bzw. Restlichtverstärker-Systeme, Infrarot-Kameras oder Wärmebild-Kameras. Grundsätzlich können aber auch die weiteren Sensoren auch zum Empfang von elektromagnetischer Strahlung anderer Wellenlängen wie z.B. Radar, Lidar oder zum Empfang von Schallwellen wie z.B. Ultraschall ausgebildet sein. Durch die zusätzlichen Sensorinformationen kann der Umfang der erfassten Objektinformationen und/oder die Genauigkeit der erfassten Objektinformationen erhöht werden und somit ein Beitrag dazu geleistet werden, dass die Objektinformationen stabilisiert werden und/oder es können Fehler in den gewonnenen Objektinformationen reduziert werden bzw. erkannte Objektinformationen bzw. Objekte verifiziert werden.

Es kann vorgesehen werden, dass im Rahmen der Verarbeitung der Roh-Bilddaten zusätzlich historische und/oder prognostizierte Objektinformationen verwendet werden. Es kann also ein zeitlicher Verlauf von Objektinformationen ermittelt und/oder gespeichert und/oder aus einem Speicher abgerufen werden und bei der Verarbeitung der Roh-Bilddaten mit herangezogen werden. Dabei kann auch die zeitliche Veränderung von Objektinformationen (wie die zeitliche Änderung von Position, Größe, Ausdehnung, Helligkeit, Bewegungsrichtung, Beschleunigung, Relativbewegung zum Sensor, Relativbewegungsrichtung zum Sensor, Relativbeschleunigung zum Sensor) mit herangezogen werden.

Erfindungsgemäß ist vorgesehen, dass das Gitter-Modell der Umgebung Zellen aufweist, wobei diesen Zellen Teil-Objektinformationen zugewiesen werden und aus Teil-Objektinformationen in einem Objekterkennungs-Schritt Objektinformationen erzeugt werden können. Die Zellen des Gitter-Modells können identisch ausgebildet sein, d.h. gleiche Größe, Form und Orientierung aufweisen. Die Zellen können also eine uniforme Verteilung und eine uniforme Ausbildung aufweisen. Die Zellen des Gitter-Modells können aber auch eine von der Position der Zelle im Gitter abhängige Größe und/oder Form und/oder Orientierung aufweisen.

Ferner ist erfindungsgemäß vorgesehen, dass als Gitter-Modell ein 3D-Gitter-Modell verwendet wird, also ein Gitter-Modell bei dem das Gitter eine dreidimensionale Form aufweist. Als dreidimensionale Form ist dabei jede Form zu verstehen, die in zumindest einem Teilbereich von einer zweidimensionalen und damit ebenen Form abweicht. Roh-Bilddaten werden mit Hilfe eines Projektionsalgorithmus auf das 3D-Gitter-Modell projiziert werden. Damit kann eine besonders gut geeignete Korrektur bzw. Entzerrung von Roh-Bilddaten, insbesondere von verzerrten Roh-Bilddaten - beispielsweise aufgrund von optischen bzw. messtechnischen Verzerrungen aufgrund bestimmter Sensoreigenschaften wie z.B. Abbildungseigenschaften - erreicht werden.

Das 3D-Gitter-Modell der Umgebung des Fahrzeugs kann insbesondere ein Modell einer gekrümmten Oberfläche darstellen, wobei der Krümmungsradius mit zunehmendem Abstand vom Fahrzeug bzw. von dem die Sensor-Daten erzeugenden Sensor zunimmt. Es hat sich gezeigt, dass solche Modelle einer gekrümmten Oberfläche, insbesondere mit einem mit der Entfernung zunehmenden Krümmung dazu geeignet sind, Verzerrungen aufgrund von Weitwinkel-Effekten zu korrigieren, wie sie z.B. bei optischen Fischaugen-Sensoren (Fish Eye Sensoren) oder anderen Sensoren mit vergleichbaren Abbildungseigenschaften auftreten.

Den Zellen des Gitter-Modells können zellenbezogene Teil-Objektinformationen zugewiesen werden. Solche Teil-Objektinformationen können Informationen zur Identifizierung und/oder Charakterisierung von erfassten Objekt-Teilen oder erfassten Strukturen sein wie Informationen zu Position, Größe wie z.B. Objekthöhen, Form, Ausdehnung, Helligkeit, Bewegungsrichtung, Beschleunigung, Relativbewegung zum Sensor, Relativbewegungsrichtung zum Sensor, Relativbeschleunigung zum Sensor.

Aus diesen Teil-Objektinformationen können zellen-bezogene Objektprofile gebildet werden und der jeweiligen Zelle zugewiesen werden. Objektprofile einer oder mehrerer Zellen können zu Objekten zusammen gefasst werden. Wenn im Rahmen des Verfahren ein Objekterkennungsschritt erfolgt, können Objektinformationen zu erkannten Objekten können mit Objektinformationen zu Objekthöhen an die Bildaufbereitungs-Einrichtung übertragen werden.

Eine weitere Ausführungsform der vorliegenden Erfindung betrifft eine Vorrichtung zur Anzeige der Umgebung eines Fahrzeuges gemäß Anspruch 8.

Zu den Vorteilen und möglichen weiteren Ausgestaltungen der erfindungsgemäßen Vorrichtung wird auf die Ausführungen zu dem erfindungsgemäßen Verfahren verwiesen, die analog für die erfindungsgemäße Vorrichtung gelten.

Bevorzugt ist dabei die Bildaufbereitungs-Einrichtung über eine erste datentechnische Verbindung (Hin-Kanal) mit der Bildverarbeitungs-Einrichtung verbunden, wobei die Bildverarbeitungs-Einrichtung über die erste datentechnische Verbindung die von der Bildaufbereitungs-Einrichtung aufbereiteten Roh-Bilddaten empfängt. Weiterhin ist vorzugsweise die Bildverarbeitungs-Einrichtung über eine weitere datentechnische Verbindung (Rück-Kanal) mit der Bildaufbereitungs-Einrichtung verbunden, wobei die Bildaufbereitungs-Einrichtung über die weitere datentechnische Verbindung die von der Bildverarbeitungs-Einrichtung aus den Roh-Bilddaten gewonnen Objektinformationen empfängt.

Die Bildaufbereitungseinrichtung ist dabei insbesondere mit der Anzeigevorrichtung verbunden, zur Anzeige von aus den Roh-Bilddaten und den Objektdaten gewonnen Bild-Objekt-Daten.

Es kann also ein Hin-Kanal von der Bildaufbereitungs-Einrichtung hin zur Bildverarbeitungs-Einrichtung und ein Rück-Kanal von der Bildverarbeitungs-Einrichtung zurück zur Bildaufbereitungs-Einrichtung vorgesehen werden. Die Bildaufbereitungs-Einrichtung ist zur Aufbereitung der Sensordaten zu Roh-Bilddaten eingerichtet. Weiter kann die Bildaufbereitungs-Einrichtung zur Aufbereitung von Roh-Bilddaten mit Hilfe von Objektinformationen eingerichtet sein. Es kann aber auch die Bildaufbereitungs-Einrichtung zur Aufbereitung von Roh-Bilddaten mit Hilfe eines Gitter-Modells - ggf. unter Einbezug zusätzlicher Objektinformationen - zu Bild-Objekt-Daten eingerichtet sein.

Der mindestens eine Sensor kann wie bereits oben ausgeführt als jede Art geeigneter Sensor zur Erzeugung von Roh-Bilddaten ausgebildet sein, insbesondere als optischer Sensor wie z.B. als optische Kamera, Nachtsicht-System bzw. Restlichtverstärker-System, Infrarot-Kamera oder Wärmebild-Kamera. Grundsätzlich kann der Sensor aber auch zum Empfang von elektromagnetischer Strahlung anderer Wellenlängen wie z.B. Radar, Lidar oder zum Empfang von Schallwellen wie z.B. Ultraschall ausgebildet sein.

Es können weitere Sensoren vorgesehen sein, welche datentechnisch mit der Bildverarbeitungs-Einrichtung verbunden sind. Dabei kann die Bildverarbeitungs-Einrichtung zur Verifizierung und/oder Stabilisierung der Objektinformationen durch Abgleich mit Daten der weiteren Sensoren eingerichtet sein. Wie bereits oben ausgeführt kann es sich z.B. um weitere optische Sensoren handeln wie z.B. als optische Kameras, Nachtsicht-Systeme bzw. Restlichtverstärker-Systeme, Infrarot-Kameras oder Wärmebild-Kameras. Grundsätzlich können aber auch die weiteren Sensoren auch zum Empfang von elektromagnetischer Strahlung anderer Wellenlängen wie z.B. Radar, Lidar oder zum Empfang von Schallwellen wie z.B. Ultraschall ausgebildet sein.

Die Bildaufbereitungs-Einrichtung kann Bilddaten-Aufbereitungs-Bereiche aufweisen, die sich funktional, programmtechnisch oder hardware-technisch nach ihren Funktionen unterscheiden können. So kann die Bildaufbereitungs-Einrichtung einen ersten Bilddaten-Aufbereitungs-Bereich zur Aufbereitung der Sensordaten zu Roh-Bilddaten und einen zweiten Bilddaten-Aufbereitungs-Bereich zur Aufbereitung von Roh-Bilddaten und Objektinformationen zu Bild-Objekt-Daten aufweisen.

Es kann ein Datenspeicher zur Speicherung historischer und/oder prognostizierter Objektinformationen vorgesehen sein, wobei die Bildverarbeitungs-Einrichtung zur Verwendung historischer und/oder prognostizierter Objektinformationen im Rahmen der Verarbeitung der Roh-Bilddaten eingerichtet ist. In diesem Datenspeicher kann ein zeitlicher Verlauf von Objektinformationen gespeichert aus diesem Speicher abgerufen werden und es kann eine datentechnische Verbindung zur Bildverarbeitungs-Einrichtung vorgesehen werden, über die die historischer und/oder prognostizierter Objektinformationen zur Verarbeitung der Roh-Bilddaten übertragen werden können.

Weiterhin kann ein weiterer Datenspeicher zur Speicherung eines Gitter-Modells der Umgebung des Fahrzeugs vorgesehen werden, wobei der weitere Datenspeicher über eine datentechnische Verbindung mit der Bildverarbeitungs-Einrichtung verbunden ist und die Bildverarbeitungs-Einrichtung kann zur Objekterkennung auf Basis von Teil-Objektinformationen eingerichtet sein, welche Zellen des Gitter-Modells zugewiesen sind. Alternativ oder zusätzlich kann die Bildaufbereitungs-Einrichtung zur Aufbereitung von Roh-Bilddaten auf Basis des Gitter-Modells eingerichtet sein, wobei dann die Bildaufbereitungs-Einrichtung über eine datentechnische Verbindung mit dem Datenspeicher verbunden ist.

Eine weitere Ausführungsform der Erfindung betrifft ein Fahrerassistenzsystem mit einer Vorrichtung nach der Erfindung und wie hierin beschrieben.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
- Fig. 1:: schematische Darstellung eines Systems mit automatischen Fahrerassistenzfunktionalitäten
- Fig. 2:: schematische Darstellung eines Systems mit automatischen Fahrerassistenzfunktionalitäten mit mehreren Sensoren und Rück-Kanal zur Übertragung von Objektinformationen

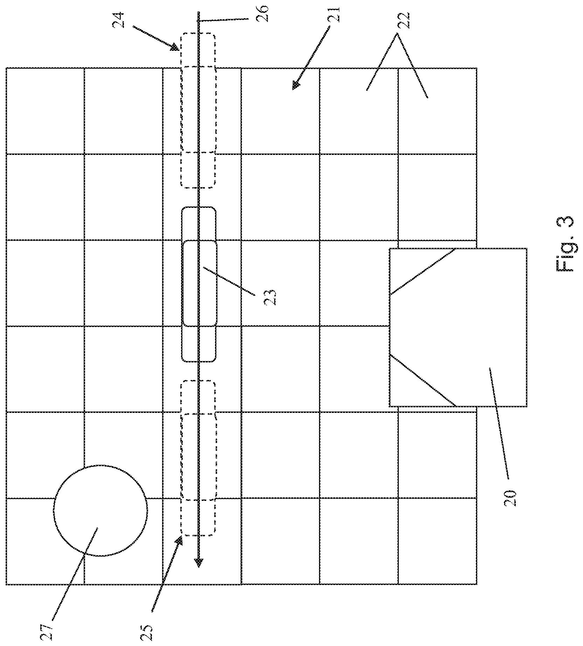

- Fig. 3:: schematische Darstellung eines ebenen Gitter-Modells
- Fig. 4:: schematische Darstellung eines entzerrten Top-View-Bildes
- Fig. 5:: schematische Darstellung der Entzerrung und perspektivischen Korrektur eines Fischaugen-Kamera-Bildes (Roh-Bilddaten)
- Fig. 6:: schematische Darstellung eines Fahrzeuges mit vier Kameras und vier einzelnen Fischaugen-Kamera-Bildern (Roh-Bilddaten)
- Fig.7:: schematische Darstellung eines 3D-Gitter-Modells mit entfernungsabhängigem Krümmungsradius
- Fig. 8:: schematische Darstellung eines mittels 3D-Gitter-Modell entzerrten Bildes
- Fig. 9:: schematische Darstellung der Längenverzerrung bei Projektion eines stehenden Objekts auf eine Ebene
- Fig. 10:: schematische Darstellung der Längenverzerrung bei Projektion eines stehenden Objekts auf eine gekrümmte Fläche

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

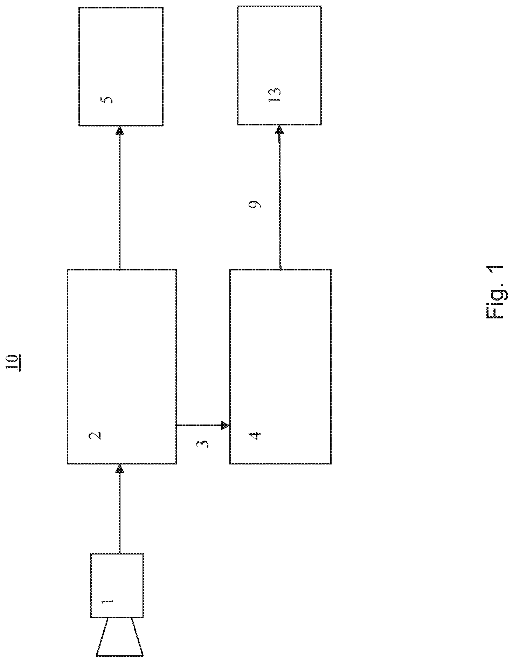

Fahrerassistenz-Systeme sollen zunehmend mit automatischen Fahrerassistenzfunktionalitäten ausgerüstet werden. Dazu kann eine Bildverarbeitung eingesetzt werden, um automatisch Objekte, insbesondere Hindernisse, zu erkennen und in der Folge einen Eingriff in die Fahrzeugdynamik zu ermöglichen. Fig. 1 zeigt schematisch ein derartiges Fahrerassistenzsystem 10.

Dieses Fahrerassistenzsystem 10 weist einen optischen Sensor, beispielsweise eine Kamera als ersten Sensor 1 zur Erfassung von Sensordaten der Umgebung eines Fahrzeugs. Eine Bildaufbereitungs-Einrichtung 2 ist mit dem ersten Sensor 1 verbunden. Die Bildaufbereitungs-Einrichtung 2 ist zur Aufbereitung der Sensordaten zu Roh-Bilddaten und/oder zu aufbereiteten Bilddaten eingerichtet. Die Bildaufbereitungs-Einrichtung 2 ist weiterhin mit einer Anzeigevorrichtung 5 - insbesondere einem geeigneten Display - verbunden, um dem Fahrer die aufbereiteten Bilddaten im Fahrzeug anzuzeigen.

Das Fahrerassistenzsystem 10 weist außerdem eine Bildverarbeitungs-Einrichtung 4 auf, welche über eine datentechnische Verbindung 3 mit der Bildaufbereitungs-Einrichtung 2 verbunden ist und von dort aus Sensordaten aufbereitete Roh-Bilddaten empfängt. Die Bildverarbeitungs-Einrichtung 4 ist über eine weitere datentechnische Verbindung 9 mit einer Fahrzeug-Dynamik 13 - also einer Einrichtung zur Steuerung von Fahrzeug-Parametern bzw. Fahrzeug-Funktionen - verbunden.

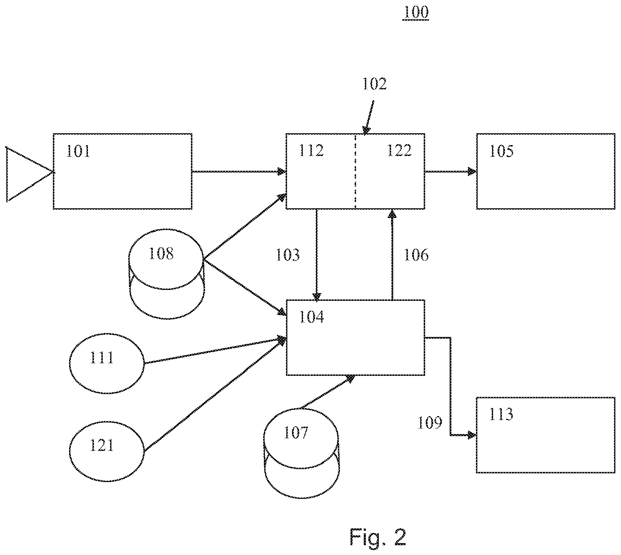

Es kann nun insbesondere vorgesehen werden, dass bei einem Fahrerassistenzsystem schon vor einem Eingriff in die Fahrzeugdynamik erkannte Objekte, vor allem Hindernisse mit einer Anzeigeeinrichtung angezeigt werden, um einem Fahrer den automatischen Fahrzeugeingriff verständlich zu machen oder ihm eine Reaktion vor Eingriff in die Fahrzeugdynamik zu ermöglichen. Fig. 2 zeigt schematisch ein derartiges Fahrerassistenzsystem 100.

Das Fahrerassistenzsystem 100 nach Fig. 2 weist ebenfalls einen ersten Sensor 101 in Form eines optischen Sensors z.B. einer Kamera zur Erfassung von Sensordaten der Umgebung eines Fahrzeugs auf. Es ist wiederum eine Bildaufbereitungs-Einrichtung 102 mit dem ersten Sensor 101 verbunden. Die Bildaufbereitungs-Einrichtung 102 ist im Fahrerassistenzsystem 100 nach Fig. 2 zur Aufbereitung der Sensordaten zu Roh-Bilddaten eingerichtet. Die Bildaufbereitungs-Einrichtung 102 kann dabei funktional voneinander getrennte Bilddaten-Aufbereitungs-Bereiche 112, 122 aufweisen, die sich programmtechnisch oder hardware-technisch unterscheiden und programmtechnisch oder hardware-technisch getrennt voneinander angeordnet sein können, so dass verschiedene Bildaufbereitungs-Schritte parallel durchgeführt werden können. So kann die Bildaufbereitungs-Einrichtung 102 einen ersten Bilddaten-Aufbereitungs-Bereich 112 zur Aufbereitung der Sensordaten zu Roh-Bilddaten und einen zweiten Bilddaten-Aufbereitungs-Bereich 122 zur Aufbereitung von Roh-Bilddaten und Objektinformationen zu Bild-Objekt-Daten aufweisen. Die Bildaufbereitungs-Einrichtung 102 ist mit einer Anzeigevorrichtung 105 - insbesondere einem geeigneten Display - verbunden, um dem Fahrer die aufbereiteten Bilddaten im Fahrzeug anzuzeigen.

Die Bildaufbereitungs-Einrichtung 102 - und dabei insbesondere der erste Bilddaten-Aufbereitungs-Bereich 112 zur Aufbereitung der Sensordaten zu Roh-Bilddaten - ist über eine erste datentechnische Verbindung 103 (Hin-Kanal) mit einer Bildverarbeitungs-Einrichtung 104, verbunden, welche von der Bildaufbereitungs-Einrichtung 102 aufbereitete Roh-Bilddaten empfängt. Die Bildverarbeitungs-Einrichtung 104 ist einerseits über eine weitere datentechnische Verbindung 109 mit einer Fahrzeug-Dynamik 113 - also einer Einrichtung zur Steuerung von Fahrzeug-Parametern bzw. Fahrzeug-Funktionen - verbunden. Zum anderen ist die Bildverarbeitungs-Einrichtung 104 über eine weitere datentechnische Verbindung 106 (Rück-Kanal) mit Bildaufbereitungs-Einrichtung 102 - und dabei insbesondere mit einem zweiten Bilddaten-Aufbereitungs-Bereich 122 zur Aufbereitung von Roh-Bilddaten und Objektinformationen zu Bild-Objekt-Daten - verbunden.

Gemäß der Ausführungsform nach Fig. 2 wird es also ermöglicht, durch einen Rückkanal aus dem Systemblock der Bildverarbeitung in den Systemblock der Bildaufbereitung Objektinformationen wie z.B. Entfernung zum Hindernis und dessen Höhe zu übertragen. Diese Informationen können in der Bildaufbereitung genutzt werden, um ein Gefährdungspotential durch erkannte Objekte (z.B. durch farbliche Markierung von Objekten in den aufbereiteten Bild-Objekt-Daten) und/oder deren Entfernung und/oder Höhe relativ zum eigenen Fahrzeug anzuzeigen.

Die Erkennung von Objekten in der Bildverarbeitungs-Einrichtung 104 kann auf einem Gitter-Modell 21, 221 beruhen. Hierbei werden Zellen 22, 222 eines das Fahrzeug 20, 220 umgebenden Gitter-Modells 21, 220 definiert. Dieses Gitter-Modell 21, 221 kann z.B in einem Datenspeicher 108 gespeichert sein, der datentechnisch mit der Bildaufbereitungs-Einrichtung 102 und mit der Bildverarbeitungs-Einrichtung 104 verbunden ist. Je nach Ausgestaltung der Erfindung kann der Datenspeicher 108 auch nur mit einer der beiden Einrichtungen 102, 104 verbunden sein. Es können nun jeder der Zellen 22, 222 bestimmte Teil-Objektinformationen zugewiesen werden, die durch die Bildverarbeitungs-Einrichtung 104 ermittelt bzw. erkannt werden. So können den Zellen 22, 222 z.B. im Kamerabild erkannte Objekthöhen, Ausdehnung, Position oder Geschwindigkeit zugewiesen werden. Hier soll das Beispiel Objekthöhe betrachtet werden. Dabei kann es vorkommen, dass in einer Zelle nur ein Teil eines Objekts 23, 27 liegt und damit nur für diesen Teil des Objekts 23, 27 eine entsprechende Teil-Objektinformation - in diesem Fall eine Höheninformation - zugewiesen wird. Die Teil-Objektinformationen - beispielsweise zugewiesen als Objektprofile - werden zu einzelnen Objekten 23, 27 zusammengefasst. Diese den einzelnen Zellen 22, 222 zugewiesenen Gitterinformation zusammen mit den Objekthöhen und den erkannten Objekten 23, 27 werden an die Bildaufbereitungs-Einrichtung 102 zurück übertragen.

Neben Ausdehnung und Position von Objekten 23, 27 (also von potentiellen Hindernissen) kann man auch deren Bewegungsrichtung 26 (bei dynamischen Objekten 23) und Bewegungsgeschwindigkeit, sowie Typ (Person, Fahrrad, Pkw, sonstiges Objekt bzw. Hindernis) und Kollisionswahrscheinlichkeit bei extrapolierter Bewegung in der Anzeige sinnvoll unterbringen. Historische Objektinformationen 24 und/oder prognostizierte Objektinformationen 25 wie auch vergangenen und prognostizierten Trajektorien des eigenen Wagens können bspw. als Schweife den betreffenden Objekten 23 zugeordnet und auch entsprechend über die Bildverarbeitungs-Einrichtung 104 und Bildaufbereitungs-Einrichtung 102 gesteuert in einer Anzeigevorrichtung 105 (Display) angezeigt werden. Ebenso kann auch das Nichtvorhandensein von Hindernissen in gewissen Bereichen visualisiert werden (z.B. farbliche Unterlegung der gesamten befahrbaren Fläche im Bild). Denkbar sind auch Kameraschwenks oder Vergrößerungen als kritisch erkannter Stellen.

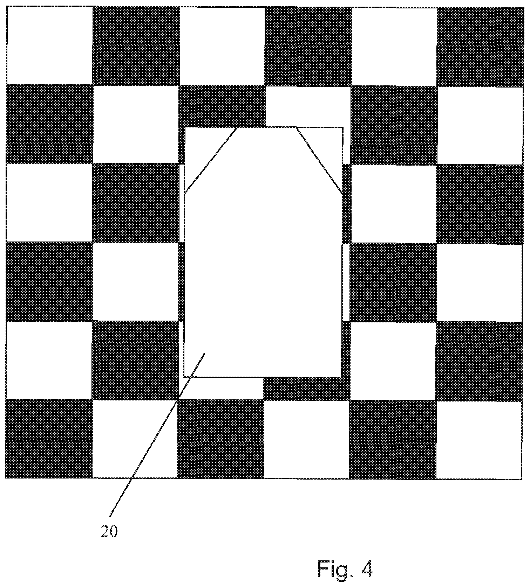

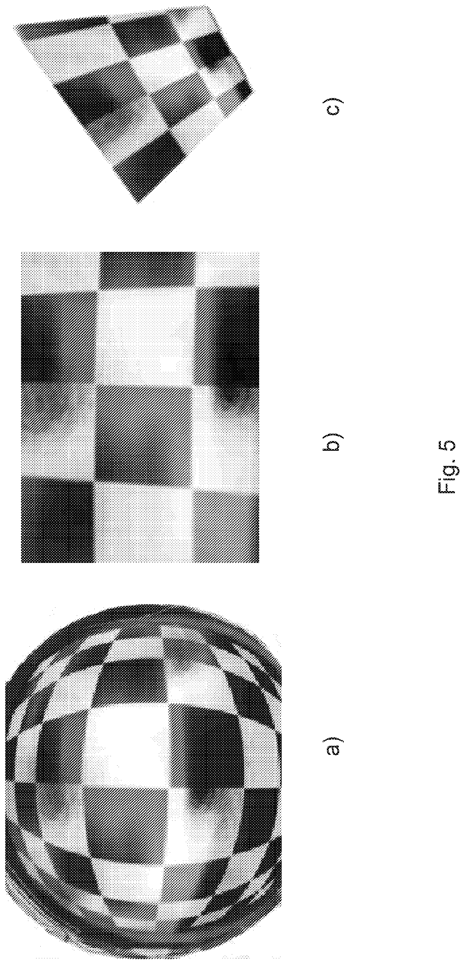

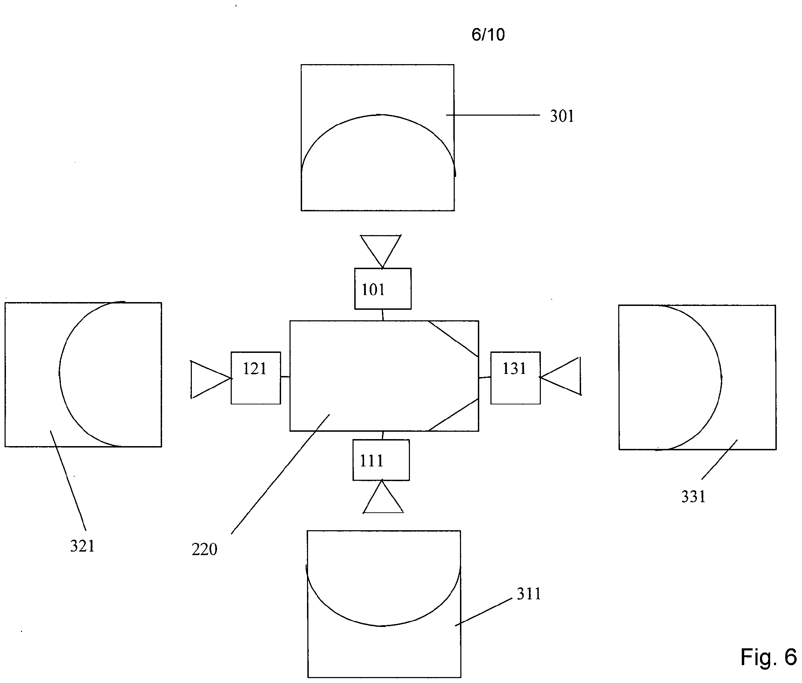

In der Bildaufbereitungs-Einrichtung 102 können die Objektinformationen und/oder das Gitter-Modell 21, 221 genutzt werden, um die Entzerrung von Roh-Bilddaten vor Erzeugung der TopView Daten zu optimieren. Fig. 4 zeigt schematisch eins solche TopView-Darstellung (oder BirdView) eines Fahrzeugs 20, 220, die dem Fahrer eine Perspektive bietet als würde er das Fahrzeug von oben betrachten. Hierzu wird das Bild in der Regel aus vier Kamerabildern zusammengesetzt (vorne, hinten, rechts und links am Fahrzeug 20, 220 angebracht, wie beispielhaft in Fig. 6 dargestellt). Übliche TopView Systeme projizieren die aufgenommenen 2D Bilder in eine 2D Ebene oder auf eine 2D Kugeloberfläche, um dem Nutzer den Eindruck zu geben als wenn er von oben auf das Fahrzeug und die Umgebung schaut. Die unterschiedlichen darzustellenden Bilder (sei es Rundumsicht, Seitensicht oder Rückfahrsicht) werden nach folgendem Prinzip erzeugt, dessen Schritte schematisch in Fig. 5 dargestellt sind: ein Bild - also Roh-Bilddaten werden gemäß Fig. 5 a) auf Basis von Sensordaten einer Kamera, hier einer Fischaugen-Kamera erzeugt. Aufgrund der Abbildungseigenschaften der Fischaugen-Kamera ergibt sich ein verzerrtes Bild. Durch eine Fischaugen-Korrektur ergibt sich das Ergebnis wie in Fig. 5 b) dargestellt. Als weiterer Schritt erfolgt eine perspektivische Korrektur mit dem Ergebnis wie in Fig. 5 c) dargestellt. Auf diese Art lassen sich Roh-Bilddaten von mehreren Sensoren 1, 101, 111, 121, 131, insbesondere mehreren Kameras - zu einem Top-View-Bild zusammensetzen wie es in Fig. 4 dargestellt ist.

Die Fischaugenkameras oder Fish Eye Kameras, die in einem solchen System arbeiten und die sogenannten Fischaugenbilder liefern, bringen einen wichtigen Vorteil: den großen Blickwinkel. Mit so einem Winkel (horizontal >180° Sicht, vertikal >130° Sicht) pro Kamera lässt sich das gesamte Fahrzeugumfeld rund herum mit nur vier Kameras beobachtet werden. Das führt dazu, dass Kosten erspart werden. Der Nachteil dabei ist, dass sich ein Fischaugenbild ohne Bearbeitung bzw. Entzerrung nicht benutzen lässt. Die Fischaugenbilder müssen daher zu einem planen Bild normalisiert werden, anschließend wird für den gewünschten Bildausschnitt die Perspektive korrigiert (durch bilineare Abbildung oder Look-Up Table). Diese Schritte sind in Fig. 5 gezeigt. Für ein Ausgabebild können dabei mehrere Ausschnitte aus den Eingangsvideos zusammengesetzt werden. Diese Schritte bzw. die hier beschriebenen Verfahren können mit Hilfe von sogenannten FPGAs (Field Programmable Gate Arrays) oder sonstigen DSPs (Ditigalen Signalprozessoren) durchgeführt werden.

Ein Problem dabei ist, dass bei üblichen Topview-Systeme weiter vom Fahrzeug entfernt befindliche senkrechte Objekte stark verzerrt (in die Länge gezogen) dargestellt werden. Die vorliegende Erfindung schlägt hierzu eine Verbesserung vor.

Fig. 6 zeigt schematisch ein Fahrzeug 220 mit vier Sensoren 101, 111, 121, 131 in Form von Kameras, insbesondere von Fischaugen-Kameras. Diese erzeugen entsprechende Roh-Bilddaten d.h. Bilder 301, 311, 321, 331, welche jedoch optisch verzerrt sind (Fischaugen-Bilder), so dass gerade Linien gekrümmt erscheinen und Dimensionen, insbesondere Längen verzerrt sind.

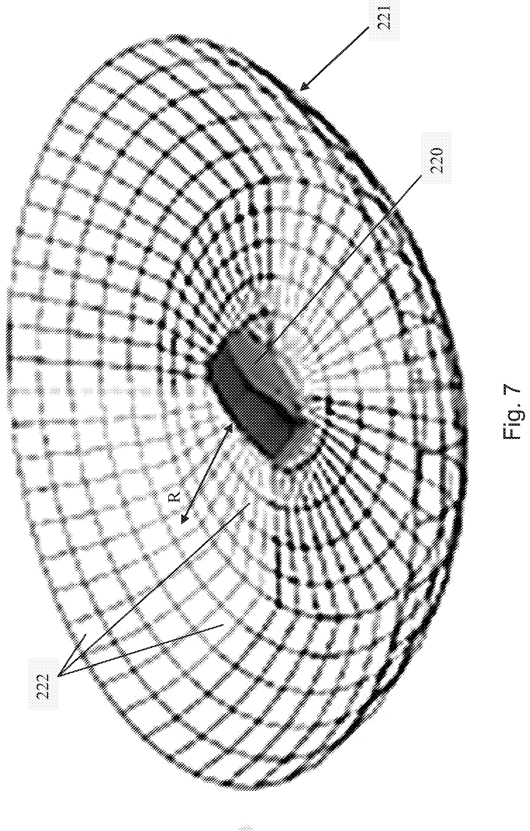

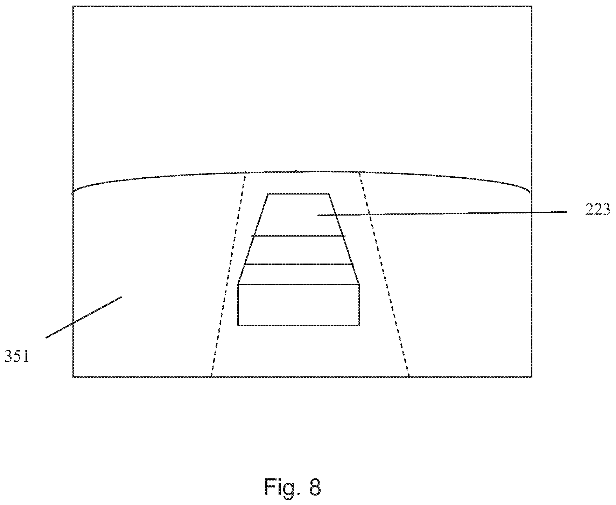

Fig. 7 zeigt nun schematisch ein Gitter-Modell , das als 3D-Gitter-Modell 221 ausgebildet ist und wobei die Zellen 222 des Gitter-Modells eine von der Position der Zelle im Gitter abhängige Größe und Form bzw. Orientierung aufweisen. Das 3D-Gitter-Modell 221 der Umgebung des Fahrzeugs 220 stellt ein Model einer gekrümmten Oberfläche dar, wobei der Krümmungsradius (man könnte auch sagen die Steigung) mit zunehmendem Abstand R vom Fahrzeug 220 zunimmt, vergleichbar einer Art "Schüssel". Roh-Bilddaten eines jeden der Bilder 301, 311, 321, 331, können nun mit Hilfe eines Projektionsalgorithmus auf das 3D-Gitter-Modell 221 projiziert werden, um eine verbesserte Entzerrung der Roh-Bilddaten eines jeden der vier Sensoren 101, 111, 121, 131 zu erreichen. Damit ergibt sich eine realistischere Darstellung von der Umgebung des Fahrzeugs 220, welche auch aus verschiedenen Perspektiven betrachtet werden kann. Fig. 8 zeigt schematisch eine derart korrigierte Darstellung bzw. Anzeige von korrigierten Bilddaten eines korrigierten Bildes 351 der Umgebung des Fahrzeuges 220, welches auf den Roh-Bilddaten eines der vier Sensoren 101, 111, 121, 131 beruht und in dem die Linien nun gerader Verlaufen, Dimensionen wie insbesondere Längenverhältnisse realitätsnaher dargestellt sind und Objekte wie z.B. andere Fahrzeuge 223 besser und realistischer zu erkennen sind.

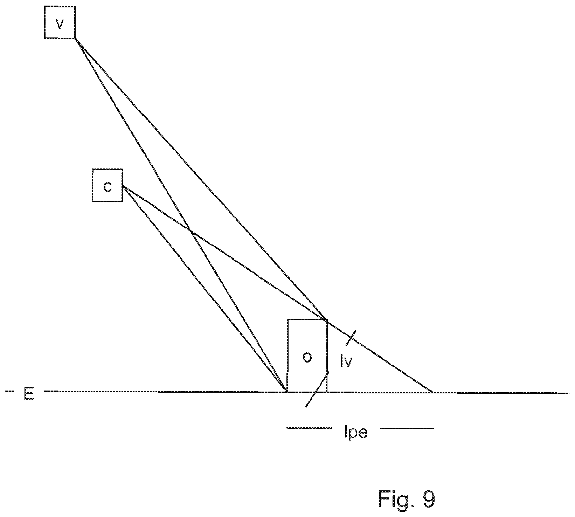

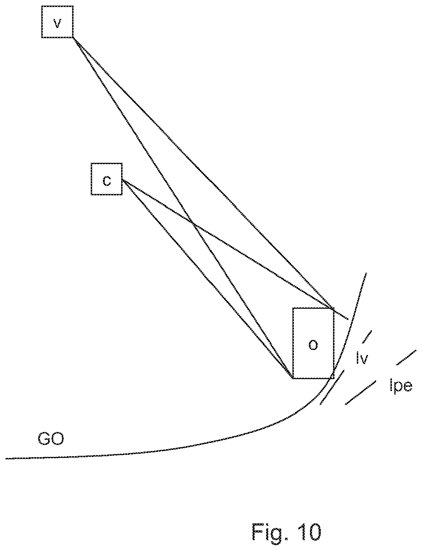

Insbesondere werden Längenverzerrungen vermieden, weiter weg befindliche Objekte werden kürzer und damit realitätsnaher dargestellt. Durch die Verwendung einer gekrümmten Projektionsoberfläche entspricht die Größe der dargestellten Objekte besser ihrer tatsächlichen Größe, als bei einer Projektion auf eine flache Ebene. Dies wird anhand der Figuren 9 und 10 genauer erläutert:

In Figur 9 ist die Längenverzerrung *lpe*/*lv* bei der Projektion eines stehenden Objekts o auf eine Ebene E dargestellt. C ist die Kameraposition, v stellt den virtuellen Blickpunkt dar, aus dessen Perspektive dem Fahrer die Fahrzeugumgebung dargestellt werden soll. Dabei ist die Verzerrung umso größer, je weiter das Objekt vom Fahrzeug entfernt ist, weil der virtuelle Blickpunkt wesentlich höher als die Kameraposition ist.

Fig. 10 zeigt, dass diese dargestellte Länge eines entfernten stehenden Objekts O bei der Projektion auf eine gekrümmte Oberfläche GO wie beispielhaft in Fig. 7 dargestellt ("Schüssel") im Verhältnis deutlich besser der Länge des tatsächlichen Objekts entspricht. Weil die Verzerrung des Objekts in der Ebene mit der Entfernung vom Fahrzeug steigt, ist die Form der gekrümmten Oberfläche in geringem Abstand vom Fahrzeug relativ flach, weiter entfernt vom Fahrzeug nimmt der Krümmungsradius bzw. die Steigung der gekrümmten Oberfläche zu.

Liegt ein 3D Anzeigeelement vor, kann die Gitter-Information bzw. Zellen-Information oder die Objektinformationen (Position, Größe, Ausdehnung) insbesondere für eine 3D-Visualisierung hilfreich genutzt werden, da in der 3D-Darstellung Hindernisse oder andere Objekte deutlich plastischer für den Beobachter dargestellt werden können und dem Fahrer so einen deutlich verbesserten Eindruck von seinem Umfeld vermitteln. Das Gitter-Modell bzw. die gekrümmte Oberfläche kann dahin optimiert werden, dass die Umgebung wie ein Live 3D Modell aussieht. Es kann dabei ein Modell der Fahrzeugumgebung bestehend z.B. aus 10*10 cm Kacheln mit Objekthöheninformation verwendet bzw. erzeugt werden. Anhand dieser Information kann die Projektionsoberfläche so modelliert werden, dass die Anzeige fast wie ein echtes 3D Modell der Umgebung aussieht.

### Bezugszeichen

- 1: Sensor
- 2: Bildaufbereitungs-Einrichtung
- 3: datentechnische Verbindung
- 4: Bildverarbeitungs-Einrichtung
- 5: Anzeigevorrichtung
- 9: datentechnische Verbindung
- 10: Fahrerassistenzsystem
- 13: Fahrzeug-Dynamik
- 20: Fahrzeug
- 21: Gitter-Modell
- 22: Zelle
- 23: Objekt
- 24: historische Objektinformationen
- 25: prognostizierte Objektinformationen
- 26: Bewegungsrichtung
- 27: Objekt
- 100: Fahrerassistenzsystem
- 101: Sensor
- 102: Bildaufbereitungs-Einrichtung
- 103: datentechnische Verbindung
- 104: Bildverarbeitungs-Einrichtung
- 105: Anzeigevorrichtung
- 106: datentechnische Verbindung
- 107: Datenspeicher
- 108: Datenspeicher
- 109: datentechnische Verbindung
- 111: Sensor
- 112: Bilddaten-Aufbereitungs-Bereich
- 121: Sensor
- 122: Bilddaten-Aufbereitungs-Bereich
- 131: Sensor
- 220: Fahrzeug
- 221: 3D-Gitter-Modell
- 222: Zelle
- 223: Fahrzeug
- 301: Bild
- 311: Bild
- 321: Bild
- 331: Bild
- 351: korrigiertes Bild
- C: Kameraposition
- E: Ebene
- GO: gekrümmte Oberfläche
- o: Objekt
- R: Abstand
- v: virtueller Blickpunkt

## Patentansprüche

1. Verfahren zur Anzeige der Umgebung eines Fahrzeuges mit den folgenden Schritten:
- Erfassen der Umgebung eines Fahrzeuges (20, 220) mit mindestens einem Sensor (1, 101, 111, 121, 131) und Erzeugen von Sensordaten der Umgebung eines Fahrzeuges (20, 220),
- Aufbereitung der Sensordaten zu Roh-Bilddaten
- Verarbeitung der Roh-Bilddaten zu Objektinformationen mit Hilfe eines Gitter-Modells (21, 221) der Umgebung des Fahrzeugs (20, 220), wobei als Gitter-Modell (21, 221) ein 3D-Gitter-Modell (221) verwendet wird, wobei Zellen (22, 222) des das Fahrzeug (20,220) umgebenen Gitter-Modells (21,220) definiert werden, und wobei den Zellen (22, 222) erkannte Objekthöhen, Ausdehnung, Position oder Geschwindigkeit zugeordnet werden,
- Verwendung des Gitter-Modells (21, 221) zur Aufbereitung von Roh-Bilddaten zu Bild-Objekt-Daten, wobei die Roh-Bilddaten mit Hilfe eines Projektionsalgorithmus auf das 3D-Gitter-Modell (221) projiziert werden,
- Anzeigen der Bild-Objekt-Daten mittels einer Anzeigevorrichtung (105) im Fahrzeug (20, 220).

2. Verfahren nach Anspruch 1, **dadurch gekennzeichnet, dass**
- die Aufbereitung der Sensordaten zu Roh-Bilddaten mittels einer Bildaufbereitungs-Einrichtung (102) und die Verarbeitung der Roh-Bilddaten zu Objektinformationen mittels einer Bildverarbeitungs-Einrichtung (104) erfolgt, wobei
- die Bildverarbeitungs-Einrichtung (104) die Roh-Bilddaten von der Bildaufbereitungs-Einrichtung (102) über eine erste datentechnische Verbindung (103) empfängt,
sowie dadurch, dass
- die Aufbereitung der Rohbilddaten unter Verwendung der Objektinformationen zu Bild-Objekt-Daten mittels der Bildaufbereitungs-Einrichtung (102) erfolgt, wobei
- die Bildaufbereitungs-Einrichtung (102) die Objektinformationen von der Bildverarbeitungs-Einrichtung (104) über eine zweite datentechnische Verbindung (106) empfängt.

3. Verfahren nach einem der Ansprüche 1 oder 2, **dadurch gekennzeichnet, dass** die Objektinformationen durch Abgleich mit Daten weiterer Sensoren (111, 121) verifiziert und/oder stabilisiert werden.

4. Verfahren nach einem der Ansprüche 1 bis 3, **dadurch gekennzeichnet, dass** im Rahmen der Verarbeitung der Roh-Bilddaten zusätzlich historische und/oder prognostizierte Objektinformationen (24, 25) verwendet werden.

5. Verfahren nach einem der Ansprüche 1 bis 4, **dadurch gekennzeichnet, dass** den Zellen (22, 222) des Gitter-Modells (21, 221) Teil-Objektinformationen zugewiesen werden und aus Teil-Objektinformationen in einem Objekterkennungs-Schritt Objektinformationen erzeugt werden.

6. Verfahren nach einem der Ansprüche 1 bis 5, **dadurch gekennzeichnet, dass** die Zellen (22, 222) des Gitter-Modells (21, 221) eine von der Position der Zelle (22, 222) im Gitter (21, 221) abhängige Größe und/oder Form und/oder Orientierung aufweisen.

7. Verfahren nach einem der Ansprüche 1 bis 6, **dadurch gekennzeichnet, dass** den Zellen (22, 222) des Gitter-Modells (21, 221) zellenbezogene Teil-Objektinformationen zugewiesen werden und Objektinformationen zu erkannten Objekten (23, 27) zusammen mit Objektinformationen zu Objekthöhen an die Bildaufbereitungs-Einrichtung (102) übertragen werden.

8. Vorrichtung zur Anzeige der Umgebung eines Fahrzeuges (20, 220), aufweisend:
- mindestens einen Sensor (1, 101, 111, 121, 131) zum Erfassen der Umgebung eines Fahrzeuges (20, 220) und zum Erzeugen von Sensordaten der Umgebung eines Fahrzeuges (20, 220),
- eine Bildaufbereitungs-Einrichtung (102) mit Bilddaten-Aufbereitungs-Bereichen (112, 122) welche zur Aufbereitung der Sensordaten zu Roh-Bilddaten und zur Aufbereitung von Roh-Bilddaten mit Hilfe eines Gitter-Modells (21, 221) zu Bild-Objekt-Daten eingerichtet sind, wobei als Gitter-Modell (21,221) ein 3D Gitter-Modell (221) verwendet wird und die Roh-Bilddaten mit Hilfe eines Projektionsalgorithmus auf das 3D Gitter-Modell (221) projiziert werden,
- eine Bildverarbeitungs-Einrichtung (104), welche eine datentechnische Verbindung (103, 106) zu der Bildaufbereitungs-Einrichtung (102) aufweist und zur Verarbeitung von Roh-Bilddaten zu Objektinformationen mit Hilfe des Gitter-Modells (21, 221) eingerichtet ist, wobei Zellen (22, 222) des das Fahrzeug (20,220) umgebenen Gitter-Modells (21,221) definiert werden, und wobei den Zellen (22, 222) erkannte Objekthöhen, Ausdehnung, Position oder Geschwindigkeit zugeordnet werden, und
- eine Anzeigevorrichtung (105) zum Anzeigen der Bild-Objekt-Daten im Fahrzeug (20, 220).

9. Vorrichtung nach Anspruch 8, **dadurch gekennzeichnet, dass**
- die Bildaufbereitungs-Einrichtung (102) über eine erste datentechnische Verbindung (103) mit der Bildverarbeitungs-Einrichtung (104) verbunden ist, wobei die Bildverarbeitungs-Einrichtung (104) über die erste datentechnische Verbindung (103) die von der Bildaufbereitungs-Einrichtung (102) aufbereiteten Roh-Bilddaten empfängt, und dadurch, dass
- die Bildverarbeitungs-Einrichtung (104) über eine weitere datentechnische Verbindung (106) mit der Bildaufbereitungs-Einrichtung (102) verbunden ist, wobei die Bildaufbereitungs-Einrichtung (102) über die weitere datentechnische Verbindung (106) die von der Bildverarbeitungs-Einrichtung (104) aus den Roh-Bilddaten gewonnen Objektinformationen empfängt.

10. Vorrichtung nach Anspruch 9, **dadurch gekennzeichnet, dass**
- die Bildaufbereitungseinrichtung (102) mit der Anzeigevorrichtung (105) verbunden ist, zur Anzeige von aus den Roh-Bilddaten und den Objektdaten gewonnen Bild-Objekt-Daten.

11. Vorrichtung nach einem der Ansprüche 8 bis 10, **gekennzeichnet durch** weitere Sensoren (111, 121, 131), welche datentechnisch mit der Bildverarbeitungs-Einrichtung (104) verbunden sind, wobei die Bildverarbeitungs-Einrichtung (104) zur Verifizierung und/oder Stabilisierung der Objektinformationen durch Abgleich mit Daten der weiteren Sensoren (111, 121, 131) eingerichtet ist.

12. Vorrichtung nach einem der Ansprüche 8 bis 11, **gekennzeichnet durch** einen Datenspeicher (107) zur Speicherung historischer und/oder prognostizierter Objektinformationen (24, 25), wobei die Bildverarbeitungs-Einrichtung (104) zur Verwendung historischer und/oder prognostizierter Objektinformationen (24, 25) im Rahmen der Verarbeitung der Roh-Bilddaten eingerichtet ist.

13. Vorrichtung nach einem der Ansprüche 8 bis 12, **gekennzeichnet durch** einen weiteren Datenspeicher (108) zur Speicherung eines Gitter-Modells (21, 221) der Umgebung des Fahrzeuges(20, 220), wobei die Bildverarbeitungs-Einrichtung (104) zur Objekterkennung auf Basis von Teil-Objektinformationen eingerichtet ist, welche Zellen (22, 222) des Gitter-Modells (21, 221) zugewiesen sind und/oder die Bildaufbereitungs-Einrichtung (102) zur Aufbereitung von Roh-Bilddaten auf Basis des Gitter-Modells (21, 221) eingerichtet ist.

14. Fahrerassistenzsystem (100) mit einer Vorrichtung nach einem der Ansprüche 8 bis 13.

## Claims

1. A method for displaying a vehicle's environment, having the following steps of:
- detecting the environment of a vehicle (20, 220) with at least one sensor (1, 101, 111, 121, 131) and producing sensor data for the environment of a vehicle (20, 220),
- conditioning the sensor data to produce raw image data
- processing the raw image data to produce object information with the aid of a grid model (21, 221) of the environment of the vehicle (20, 220), wherein a 3D grid model (221) is used as the grid model (21, 221), wherein cells (22, 222) of the grid model (21, 220) surrounding the vehicle (20, 220) are defined, and wherein recognised object heights, extent, position or speed are allocated to the cells (22, 222),
- using the grid model (21, 221) to condition raw image data to produce image object data, wherein the raw image data are projected with the aid of a projection algorithm onto the 3D grid model (221),
- displaying the image object data by means of a display device (105) in the vehicle (20, 220).

2. The method according to Claim 1, **characterised in that**
- the sensor data are conditioned to produce raw image data by means of an image conditioning apparatus (102) and the raw image data are processed to produce object information by means of an image processing apparatus (104), wherein
- the image processing apparatus (104) receives the raw image data from the image conditioning apparatus (102) via a first data connection (103),
and **in that**
- the raw image data are conditioned using the object information to produce image object data by means of the image conditioning apparatus (102), wherein
- the image conditioning apparatus (102) receives the object information from the image processing apparatus (104) via a second data connection (106).

3. The method according to any one of Claims 1 or 2,
**characterised in that** the object information is verified and/or stabilised by comparison with data of further sensors (111, 121).

4. The method according to any one of Claims 1 to 3, **characterised in that** within the framework of the processing of the raw image data, historic and/or forecasted object information (24, 25) is additionally used.

5. The method according to any one of Claims 1 to 4, **characterised in that** partial object information is assigned to the cells (22, 222) of the grid model (21, 221) and object information is produced from partial object information in an object recognition step.

6. The method according to any one of Claims 1 to 5, **characterised in that** the cells (22, 222) of the grid model (21, 221) have a size and/or form and/or orientation which is/are dependent upon the position of the cell (22, 222) in the grid (21, 221).

7. The method according to any one of Claims 1 to 6, **characterised in that** cell-related partial object information is assigned to the cells (22, 222) of the grid model (21, 221) and object information regarding recognised objects (23, 27), together with object information regarding object heights, is transferred to the image conditioning apparatus (102).

8. A device for displaying the environment of a vehicle (20, 220), having:
- at least one sensor (1, 101, 111, 121, 131) for detecting the environment of a vehicle (20, 220) and for producing sensor data of the environment of a vehicle (20, 220),
- an image conditioning apparatus (102) having image data conditioning regions (112, 122) which are set up to condition the sensor data to produce raw image data and to condition raw image data with the aid of a grid model (21, 221) to produce image object data, wherein a 3D grid model (221) is used as the grid model (21, 221) and the raw image data are projected with the aid of a projection algorithm onto the 3D grid model (221),
- an image processing apparatus (104) which has a data connection (103, 106) to the image conditioning apparatus (102) and which is set up to process raw image data to produce object information with the aid of the grid model (21, 221), wherein cells (22, 222) of the grid model (21, 221) surrounding the vehicle (20,220) are defined, and wherein recognised object heights, extent, position or speed are allocated to the cells (22, 222), and
- a display device (105) for displaying the image object data in the vehicle (20, 220).

9. The device according to Claim 8, **characterised in that**
- the image conditioning apparatus (102) is connected via a first data connection (103) to the image processing apparatus (104), wherein the image processing apparatus (104) receives the raw image data conditioned by the image conditioning apparatus (102) via the first data connection (103), and **in that**
- the image processing apparatus (104) is connected via a further data connection (106) to the image conditioning apparatus (102), wherein the image conditioning apparatus (102) receives the object information obtained by the image processing apparatus (104) from the raw image data via the further data connection (106).

10. The device according to Claim 9, **characterised in that**
- the image conditioning apparatus (102) is connected to the display device (105), in order to display image object data obtained from the raw image data and the object data.

11. The device according to any one of Claims 8 to 10, **characterised by** further sensors (111, 121, 131), which have a data connection to the image processing apparatus (104), wherein the image processing apparatus (104) is set up to verify and/or stabilise the object information by comparison with data of the further sensors (111, 121, 131).

12. The device according to any one of Claims 8 to 11, **characterised by** a data memory (107) for storing historic and/or forecasted object information (24, 25), wherein the image processing apparatus (104) is set up to use historic and/or forecasted object information (24, 25) within the framework of the processing of the raw image data.

13. The device according to any one of Claims 8 to 12, **characterised by** a further data memory (108) for storing a grid model (21, 221) of the environment of the vehicle (20, 220), wherein the image processing apparatus (104) is set up to recognise objects on the basis of partial object information which is assigned to cells (22, 222) of the grid model (21, 221) and/or the image conditioning apparatus (102) is set up to condition raw image data on the basis of the grid model (21, 221).

14. A driver assistance system (100) having a device according to any one of Claims 8 to 13.

## Revendications

1. Procédé pour l'affichage de l'environnement d'un véhicule avec les étapes suivantes :
- détection de l'environnement d'un véhicule (20, 220) avec au moins un capteur (1, 101, 111, 121, 131) et génération de données de capteur de l'environnement d'un véhicule (20, 220),
- mise en forme des données de capteur en données d'images brutes
- génération d'informations d'objets à partir des données d'images brutes à l'aide d'un modèle en grille (21, 221) de l'environnement du véhicule (20, 220), un modèle en grille 3D (221) étant utilisé comme modèle en grille (21, 221), des cellules (22, 222) du modèle en grille (21, 220) environnant le véhicule (20, 220) étant définies et des hauteurs d'objet, extension, position ou vitesse détectées étant attribuées aux cellules (22, 222),
- utilisation du modèle en grille (21, 221) pour la mise en forme de données d'images brutes en données d'objets d'images, les données d'images brutes étant projetées sur le modèle en grille 3D (221) à l'aide d'un algorithme de projection,
- affichage des données d'objets d'images au moyen d'un dispositif d'affichage (105) dans le véhicule (20, 220).

2. Procédé selon la revendication 1, **caractérisé en ce que**
- la mise en forme des données de capteur en données d'images brutes est effectuée au moyen d'un équipement de mise en forme d'images (102) et la génération d'informations d'objets à partir des données d'images brutes est effectuée au moyen d'un équipement de traitement d'images (104),
- l'équipement de traitement d'images (104) recevant les données d'images brutes de l'équipement de mise en forme d'images (102) par une première liaison informatique (103),
et **en ce que**
- la mise en forme des données d'images brutes en données d'objets d'image en utilisant les informations d'objets est effectuée au moyen de l'équipement de mise en forme d'images (102),
- l'équipement de mise en forme d'images (102) recevant les informations d'objets de l'équipement de traitement d'images (104) par une deuxième liaison informatique (106).

3. Procédé selon l'une des revendications 1 ou 2, **caractérisé en ce que** les informations d'objets sont vérifiées et/ou stabilisées par la comparaison avec les données d'autres capteurs (111, 121).

4. Procédé selon l'une des revendications 1 à 3, **caractérisé en ce que**, en outre, des informations d'objets (24, 25) historiques et/ou pronostiquées sont utilisées dans le cadre du traitement des données d'images brutes.

5. Procédé selon l'une des revendications 1 à 4, **caractérisé en ce que** des informations d'objets partielles sont attribuées aux cellules (22, 222) du modèle en grille (21, 221) et **en ce que** des informations d'objets sont générées à partir des informations d'objets partielles au cours d'une étape de détection d'objets.

6. Procédé selon l'une des revendications 1 à 5, **caractérisé en ce que** les cellules (22, 222) du modèle en grille (21, 221) présentent une dimension et/ou forme et/ou orientation dépendant de la position de la cellule (22, 222) dans la grille (21, 221).

7. Procédé selon l'une des revendications 1 à 6, **caractérisé en ce que** des informations d'objets partielles se rapportant à des cellules sont attribuées aux cellules (22, 222) du modèle en grille (21, 221) et **en ce que** des informations d'objets relatives à des objets détectés (23, 27) sont transmises à l'équipement de mise en forme d'images (102) conjointement à des informations d'objets relatives à des hauteurs d'objets.

8. Dispositif pour l'affichage de l'environnement d'un véhicule (20, 220), présentant :
- au moins un capteur (1, 101, 111, 121, 131) pour la détection de l'environnement d'un véhicule (20, 220) et pour la génération de données de capteur de l'environnement d'un véhicule (20, 220),
- un équipement de mise en forme d'images (102) avec des zones de mise en forme de données d'images (112, 122), lesquelles sont mises en place pour la mise en forme des données de capteur en données d'images brutes et pour la mise en forme de données d'images brutes en données d'objets d'images à l'aide d'un modèle en grille (21, 221), un modèle en grille 3D (221) étant utilisé et les données d'images brutes étant projetées sur le modèle en grille 3D (221) à l'aide d'un algorithme de projection.
- un équipement de traitement d'images (104), lequel présente une liaison informatique (103, 106) avec l'équipement de mise en forme d'images (102) et est mis en place pour la génération d'informations d'objets à partir des données d'images brutes à l'aide du modèle en grille (21, 221), des cellules (22, 222) du modèle en grille (21, 221) environnant le véhicule (20, 220) étant définies et des hauteurs d'objet, extension, position ou vitesse détectées étant attribuées aux cellules (22, 222), et
- un dispositif d'affichage (105) pour l'affichage des données d'objets d'images dans le véhicule (20, 220).

9. Dispositif selon la revendication 8, **caractérisé en ce que**
- l'équipement de mise en forme de données (102) est relié avec l'équipement de traitement d'images (104) par une première liaison informatique (103), l'équipement de traitement d'images (104) recevant les données d'images brutes mises en forme par l'équipement de mise en forme d'images (102) par la première liaison informatique (103), et **en ce que**
- l'équipement de traitement de données (104) est relié avec l'équipement de mise en forme d'images (102) par une autre liaison informatique (106), l'équipement de mise en forme d'images (102) recevant les informations d'objets obtenues par l'équipement de traitement d'images (104) à partir des données d'images brutes par l'autre liaison informatique (106).

10. Dispositif selon la revendication 9, **caractérisé en ce que**
- l'équipement de mise en forme d'images (102) est relié avec le dispositif d'affichage (105), pour l'affichage de données d'objets d'images obtenues à partir des données d'images brutes et des données d'objets.

11. Dispositif selon l'une des revendications 8 à 10, **caractérisé par** d'autres capteurs (111, 121, 131), lesquels sont reliés par informatique avec l'équipement de traitement d'images (104), l'équipement de traitement d'images (104) étant mis en place pour la vérification et/ou la stabilisation des informations d'objets par la comparaison avec des données des autres capteurs (111, 121, 131).

12. Dispositif selon l'une des revendications 8 à 11, **caractérisé par** une mémoire d'informations (107) pour le stockage d'informations d'objets (24, 25) historiques et/ou pronostiquées, l'équipement de traitement d'images (104) étant mis en place pour l'utilisation des informations d'objets (24, 25) historiques et/ou pronostiquées dans le cadre du traitement des données d'images brutes.

13. Dispositif selon l'une des revendications 8 à 12, **caractérisé par** une autre mémoire d'informations (108) pour le stockage d'un modèle en grille (21, 221) de l'environnement du véhicule (20, 220), l'équipement de traitement d'images (104) étant mis en place pour la détection d'objets sur la base d'informations d'objets partielles, lesquelles sont attribuées à des cellules (22, 222) du modèle en grille (21, 221), et/ou l'équipement de mise en forme d'images (102) étant mis en place pour la mise en forme de données d'images brutes sur la base du modèle en grille (21, 221).

14. Système d'aide à la conduite (100) avec un dispositif selon l'une des revendications 8 à 13.
